# EUROPÄISCHE PATENTSCHRIFT

(11) **EP 3 381 323 B1**
(45) Veröffentlichungstag und Bekanntmachung des Hinweises auf die Patenterteilung: **19.08.2020**
(21) Anmeldenummer: 18164102.8
(22) Anmeldetag: 27.03.2018
(51) Int. Cl.: A47B 47/04, F16B 12/24

(54) **RÜCKWAND-EINSTECKKEIL**
REAR PANEL INSERT
INSERT DE PANNEAU ARRIÈRE

(30) Priorität: 30.03.2017 DE 202017101856 U
(43) Veröffentlichungstag der Anmeldung: 03.10.2018
(73) Patentinhaber: Häfele Berlin GmbH & Co KG, 12307 Berlin (DE)
(72) Erfinder: LEISTERT, Peer, 15566 Schöneiche (DE)
(74) Vertreter: Kohler Schmid Möbus Patentanwälte

(56) Entgegenhaltungen:
- CH-A5- 696 889
- DE-A1- 3 218 551
- DE-B3- 10 229 300
- DE-U1- 29 907 723
- DE-U1-202008 004 145
- GB-A- 2 256 894
- US-A- 4 101 233
- US-A- 4 744 612

## Beschreibung

Die Erfindung betrifft einen Einsteckkeil zum Festklemmen einer ersten Platte innerhalb einer Nut einer zweiten Platte, sowie eine zugehörige Plattenanordnung.

Aus DE 83 31 968 U1 oder DE 20 2008 006 607 U1 sind Rückwandhalter zum Lagefixieren einer Rückwandplatte innerhalb einer Nut einer Bodenplatte bekannt, bei denen der Rückwandhalter in der Bodenplatte verankert und die Rückwandplatte mittels einer Schraube an den Rückwandhalter angeschraubt wird.

Der Erfindung liegt demgegenüber die Aufgabe zugrunde, die Lagefixierung einer ersten Platte innerhalb einer Nut einer zweiten Platte einfacher, preiswerter und werkzeuglos zu gestalten.

Diese Aufgabe wird erfindungsgemäß gelöst durch einen Einsteckkeil zum Festklemmen einer ersten Platte innerhalb einer Nut einer zweiten Platte mit einem Rechteckwinkel, der einen breiten Schenkel und einen keilförmigen, schmalen Schenkel aufweist, und mit einer an der Außenseite des breiten Schenkels angeformten Federzunge, die sich mit ihrem freien Zungenende bis über die Außenseite des schmalen Schenkels erstreckt.

Der erfindungsgemäße Einsteckkeil lässt sich einfach und preiswert mit geringem Fertigungsaufwand, z.B. aus Kunststoff oder Zinkdruckguss, herstellen und intuitiv ohne Werkzeug montieren.

Vorzugsweise bilden die Außenseite des schmalen Schenkels und die Innenseite des breiten Schenkels einen Winkel von 90° aus.

Die Federzunge ist bevorzugt gegenüber der Innenseite des breiten Schenkels schräg gestellt, wobei die Außenseite des schmalen Schenkels und die Außenseite der Federzunge einen Winkel zwischen 70° und 80°, insbesondere von 75°, ausbilden. Vorzugsweise schließt sich die Federzunge mit ihrer Außenseite stufenlos an die Außenseite des schmalen Schenkels an.

Besonders bevorzugt weisen die Außen- und/oder Innenseite des schmalen Schenkels und/oder die Außenseite der Federzunge Vorsprünge, z.B. in Form von spitzen Dornen, Zähnen, Widerhaken, Riffelung, Krallen oder Rippen, auf, um einem Herausziehen des montierten Einsteckkeils entgegenzuwirken.

Um die elastische Auslenkbarkeit der Federzunge gegenüber dem Rechteckwinkel zu erhöhen, kann der schmale Schenkel nahe dem Übergangsbereich zur Federzunge einen zu seiner Außenseite hin offenen, parallel zu der Federzunge verlaufenden Schlitz aufweisen.

Vorzugsweise weist der breite Schenkel eine zu seiner Innenseite und zu seiner dem schmalen Schenkel abgewandten Stirnseite hin offene Aussparung auf, in die ein Demontagewerkzeug (z.B. ein Schraubendreher) eingeführt werden kann.

Die Erfindung betrifft auch eine Anordnung mit zwei miteinander verbundenen Platten, von denen die eine, erste Platte in eine Nut der anderen, zweiten Platte eingesetzt ist, und mit einem wie oben ausgebildeten Einsteckkeil, dessen keilförmiger, schmaler Schenkel in einen Spalt, welcher bei eingesetzter erster Platte innerhalb der Nut vorhanden ist, soweit klemmend eingedrückt ist, bis der breite Schenkel mit seiner Innenseite an der zweiten Platte anliegt, und dessen Federzunge aufgerichtet und gegen die erste Platte gepresst ist. Für eine Klemmwirkung ist die Nutbreite der Nut um höchstens die Breite des schmalen Schenkels größer als die Plattenstärke der ersten Platte. In dieser erfindungsgemäßen Anordnung sind die beiden Platten mit hoher Winkelstabilität aneinander fixiert.

Um eine stärkere Klemmwirkung zu erreichen, kann die Nutbreite um weniger als die Breite des schmalen Schenkels größer als die Plattenstärke der ersten Platte gewählt sein.

Für eine exakte Lagevorgabe kann die zweite Platte eine, insbesondere zur Nut hin offene, Bohrung aufweisen, in die ein an der Innenseite des breiten Schenkels vorstehender Pin des Einsteckkeils positionsgenau eingreift.

Weitere Vorteile der Erfindung ergeben sich aus der Beschreibung, den Ansprüchen und der Zeichnung.

Es zeigen:
- Fign. 1a, 1b: eine erste Ausführungsform des erfindungsgemäßen Rückwand-Einsteckkeils in einer perspektivischen Ansicht (Fig. 1a) und in einer Seitenansicht (Fig. 1b);
- Fign. 2a-2d: die Montage des erfindungsgemäßen Rückwand-Einsteckkeils;
- Fig. 3: die in Fig. 2b gezeigte Anordnung mit einem modifizierten Rückwand-Einsteckkeil;
- Fig. 4: eine zweite Ausführungsform des erfindungsgemäßen RückwandEinsteckkeils in einer Vorderansicht; und
- Fign. 5a, 5b: eine dritte Ausführungsform des erfindungsgemäßen RückwandEinsteckkeils in einer Seitenansicht (Fig. 5a) und in einer Vorderansicht (Fig. 5b).

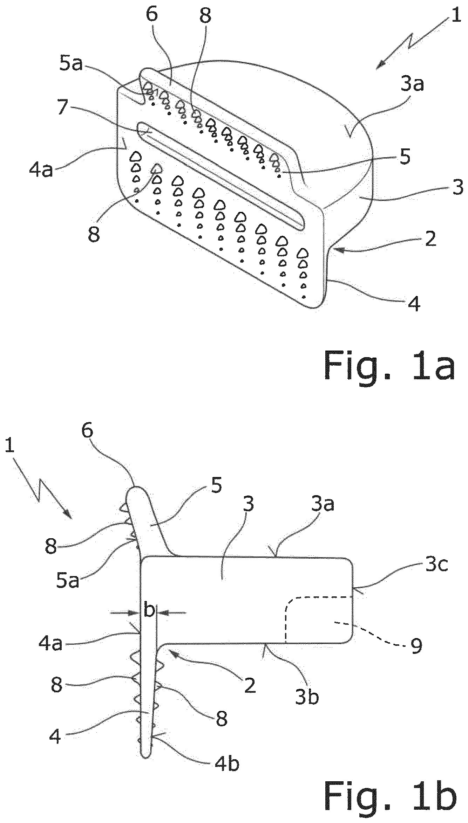

Der in **Fig. 1** gezeigte Rückwand-Einsteckkeil ("Rückwandhalter") **1** dient zum Festklemmen einer ersten Platte innerhalb einer Nut einer zweiten Platte und ist einstückig z.B. aus Kunststoff oder Zinkdruckguss geformt.

Der Einsteckkeil 1 umfasst einen Rechteckwinkel **2** mit einem breiteren Schenkel **3** und mit einem keilförmigen, schmaleren Schenkel **4**, sowie eine an der Außenseite **3a** des breiten Schenkels 3 angeformte Federzunge **5**, die sich mit ihrem freien Zungenende **6** bis über die Außenseite **4a** des schmalen Schenkels 4 erstreckt. Der schmale Schenkel 4 und die Federzunge 5 sind jeweils als durchgehende Wand ausgebildet. Die Innenseite **3b** des breiten Schenkels 3 und die Außenseite 4a des schmalen Schenkels 4 bilden einen Winkel von 90° aus, wobei die Außenseite 3a des breiten Schenkels 3 wie im gezeigten Ausführungsbeispiel parallel zur Innenseite 3b des breiten Schenkels 3 verlaufen kann, aber nicht muss. Der zwischen den Außen- und Innenseiten 4a, **4b** des schmalen Schenkels 4 gebildete Keilwinkel beträgt zwischen 2° und 5°, bevorzugt ca. 3°.

Die Federzunge 5 ist gegenüber der Innenseite 3b des breiten Schenkels 3 schräg gestellt. Dabei schließt sich die Außenseite **5a** der Federzunge 5 stufenlos an die Außenseite 4a des schmalen Schenkels 4 an und bildet zusammen mit der Außenseite 5a der Federzunge 5 einen Winkel zwischen 70° und 80°, bevorzugt von ca. 75°, aus. Nahe dem Übergangsbereich zur Federzunge 5 weist der schmale Schenkel 4 einen zu seiner Außenseite 4a hin offenen, parallel zu der Federzunge 5 verlaufenden Schlitz **7** auf, um die elastische Auslenkbarkeit der Federzunge 5 gegenüber dem Rechteckwinkel 2 zu erhöhen.

Die Außen- und Innenseiten 4a, 4b des schmalen Schenkels 4 sowie die Außenseite 5a der Federzunge 5 weisen dornenartige Vorsprünge **8** auf, deren Längen jeweils zum freien Schenkelende bzw. zum freien Zungenende 6 hin abnehmen. Im breiten Schenkel 3 ist weiterhin eine zu seiner Innenseite 3b und zu seiner dem schmalen Schenkel 4 abgewandten Außenseite **3c** hin offene Aussparung **9** vorgesehen.

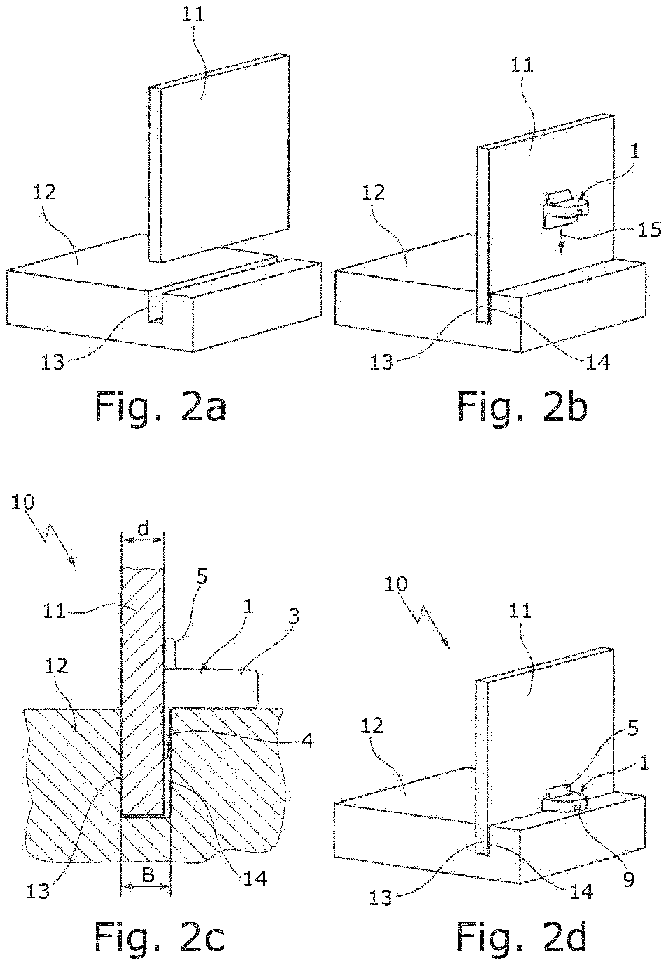

In den **Fign. 2a-2d** ist die Montage des Einsteckkeils 1 zum Festklemmen einer Rückwandplatte **11** innerhalb einer Nut **13** einer Bodenplatte **12** gezeigt. Die Rückwandplatte 11 wird in die Nut 13 der Bodenplatte 12 eingesteckt (Fig. 2a), deren Nutbreite **B** um höchstens die Breite **b** des schmalen Schenkels 4 größer als die Plattenstärke **d** der Rückwandplatte 11 ist. Dadurch verbleibt bei eingesteckter Rückwandplatte 11 in der Nut 13 ein Spalt **14**, dessen Spaltbreite höchstens der Breite b des schmalen Schenkels 4 entspricht (Fign. 2b, 2c) und beispielsweise ca. 1 mm betragen kann. In diesen Spalt 14 wird der Einsteckkeil 1 mit seinem keilförmigen, schmalen Schenkel 4 soweit in Pfeilrichtung **15** klemmend eingedrückt, bis der breite Schenkel 3 mit seiner Innenseite 3b an der Bodenplatte 12 anliegt (Fign. 2c, 2d). Die Federzunge 5 wird hierbei aufgerichtet und gegen die Rückwandplatte 11 gepresst. Die Rückwandplatte 11 ist somit durch den keilförmigen, schmalen Schenkel 4 in der Nut 13 festgeklemmt und durch die angepresste Federzunge 5 zusätzlich stabilisiert. Die Vorsprünge 8 des schmalen Schenkels 4 graben sich in die Rückwandplatte 11 und in die Nutflanke der Nut 13 und die Vorsprünge 8 der Federzunge 5 in die Rückwandplatte 11 ein, so dass der Einsteckkeil 1 und somit die gesamte Anordnung **10** lagefixiert ist.

Zur Demontage kann der Einsteckkeil 1 mittels eines in die Aussparung 9 eingesetzten Schraubendrehers entgegen der Steckrichtung 15 aus dem Spalt 14 herausgehebelt werden.

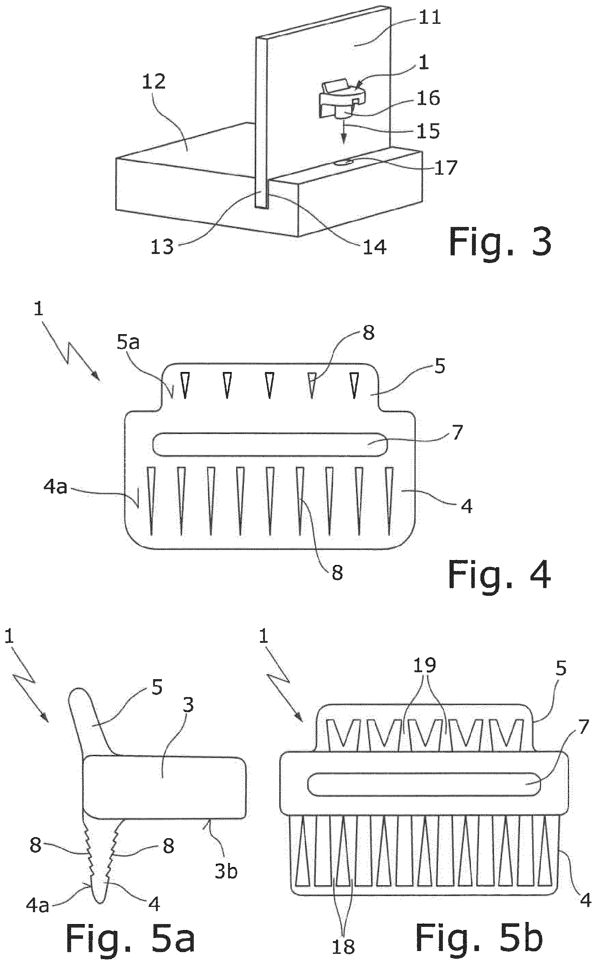

In **Fig. 3** ist der Einsteckkeil 1 mittels eines angeformten Pins **16**, der am breiten Schenkel 3 in Steckrichtung 15 nach unten vorsteht und in eine - insbesondere zur Nut 13 hin offene - Bohrung **17** der Bodenplatte 12 eingreift, in seiner Lage positioniert.

Statt als ebene Wände wie in Fig. 1, können der schmale Schenkel 4 und/oder die Federzunge 5 auch als Wände mit einem wellenförmigen Querschnitt ausgeführt sein, der dann im eingeklemmten Zustand flachgepresst sein kann.

Statt als spitze Dornen wie in Fig. 1, können die Vorsprünge 8 auch als Zähne, Widerhaken, Riffelung, Krallen oder wie in **Fig. 4** gezeigt als vertikale Rippen ausgeführt sein, die hier lediglich beispielhaft in Form von gleichschenkligen spitzwinkligen Dreiecken mit jeweils nach unten gerichteter Spitze ausgeführt sind. In jedem Fall wirken die Vorsprünge 8 einem Herausziehen des Einsteckkeils 1 aus dem Spalt 14 und einem Herausziehen der Rückwandplatte 11 aus der Bodenplatte 12 entgegen.

Vom Einsteckkeil 1 der Fig.1 unterscheidet sich der in **Fign. 5a**, **5b** gezeigte Einsteckkeil 1 dadurch, dass hier der schmale Schenkel 4 und die Federzunge 5 nicht als durchgehende Wände, sondern jeweils durch eine Reihe von beabstandeten Vertikalstreben 18, 19 gebildet sind und dass die Vorsprünge 8 durch Zähne der Vertikalstreben 18, 19 gebildet sind. Außerdem bilden die Innenseite 3b des breiten Schenkels 3 und die Außenseite 4a des schmalen Schenkels 4 einen Winkel von kleiner als 90°, bevorzugt im Bereich von zwischen 80° bis 85° aus.

## Patentansprüche

1. Einsteckkeil (1) zum Festklemmen einer ersten Platte (11) innerhalb einer Nut (13) einer zweiten Platte (12), um die beiden Platten (11, 12) miteinander zu verbinden, aufweisend
einen breiten Schenkel (3) mit einer zur Anlage an der zweiten Platte (12) bestimmten Innenseite (3b) und einen keilförmigen, schmalen Schenkel (4) zum klemmenden Eindrücken in einen Spalt (14), welcher bei eingesetzter erster Platte (11) innerhalb der Nut (13) vorhanden ist, soweit, bis der breite Schenkel (3) mit seiner Innenseite (3b) an der zweiten Platte (22) anliegt, wobei der breite und der schmale Schenkel (3, 4) einen Rechteckwinkel (2) ausbilden, und
eine an der Außenseite (3a) des breiten Schenkels (3) angeformte Federzunge (5), die gegenüber der Innenseite (3b) des breiten Schenkels (3) schräg gestellt ist und sich mit ihrem freien Zungenende (6) bis über die Außenseite (4a) des schmalen Schenkels (4) erstreckt, um durch die eingesetzte erste Platte (11) aufgerichtet und gegen die erste Platte (11) gepresst zu werden.

2. Einsteckkeil nach Anspruch 1, **dadurch gekennzeichnet, dass** die Außenseite (4a) des schmalen Schenkels (4) und die Innenseite (3b) des breiten Schenkels (3) einen Winkel von 90° ausbilden.

3. Einsteckkeil nach einem der vorhergehenden Ansprüche, **dadurch gekennzeichnet, dass** sich die Außenseite (5a) der Federzunge (5) stufenlos an die Außenseite (4a) des schmalen Schenkels (4) anschließt.

4. Einsteckkeil nach Anspruch 3, **dadurch gekennzeichnet, dass** die Außenseite (4a) des schmalen Schenkels (4) und die Außenseite (5a) der Federzunge (5) einen Winkel zwischen 10° und 20°, insbesondere von ca. 15°, ausbilden.

5. Einsteckkeil nach einem der vorhergehenden Ansprüche, **dadurch gekennzeichnet, dass** die Außen- und/oder Innenseite (4a, 4b) des schmalen Schenkels (4) und/oder die Außenseite (5a) der Federzunge (5) Vorsprünge (8) aufweisen.

6. Einsteckkeil nach einem der vorhergehenden Ansprüche, **dadurch gekennzeichnet, dass** der schmale Schenkel (4) nahe dem Übergangsbereich zu der Federzunge (5) einen zu seiner Außenseite (4a) hin offenen, parallel zu der Federzunge (5) verlaufenden Schlitz (7) aufweist.

7. Einsteckkeil nach einem der vorhergehenden Ansprüche, **dadurch gekennzeichnet, dass** der breite Schenkel (3) eine zu seiner Innenseite (3b) und zu seiner dem schmalen Schenkel (4) abgewandten Außenseite (3c) hin offene Aussparung (9) aufweist.

8. Einsteckkeil nach einem der vorhergehenden Ansprüche, **dadurch gekennzeichnet, dass** die Außenseite (4a) des schmalen Schenkels (4) und/oder die Außenseite (5a) der Federzunge (5) eine ebene oder eine gewellte Anlagefläche ausbilden.

9. Einsteckkeil nach einem der vorhergehenden Ansprüche, **dadurch gekennzeichnet, dass** der schmale Schenkel (4) und/oder die Federzunge (5) als massive Wand oder durch eine Reihe von beabstandeten Vertikalstreben (18, 19) ausgebildet ist.

10. Einsteckkeil nach einem der vorhergehenden Ansprüche, **dadurch gekennzeichnet, dass** der breite Schenkel (3) an seiner Innenseite (3b) einen vorstehenden Pin (16) aufweist.

11. Anordnung (10) mit zwei miteinander verbundenen Platten (11, 12), von denen die eine, erste Platte (11) in eine Nut (13) der anderen, zweiten Platte (12) eingesetzt ist, und mit einem Einsteckkeil (1) nach einem der vorhergehenden Ansprüche, dessen keilförmiger, schmaler Schenkel (4) in einen Spalt (14), welcher bei eingesetzter erster Platte (11) innerhalb der Nut (13) vorhanden ist, soweit klemmend eingedrückt ist, bis der breite Schenkel (3) mit seiner Innenseite (3b) an der zweiten Platte (22) anliegt, und dessen Federzunge (5) aufgerichtet und gegen die erste Platte (11) gepresst ist.

12. Anordnung nach Anspruch 11, **dadurch gekennzeichnet, dass** die Nutbreite (B) der Nut (13) um höchstens die Breite (b) des schmalen Schenkels (4) größer als die Plattenstärke (d) der ersten Platte (11) ist.

13. Anordnung nach Anspruch 11 oder 12, **dadurch gekennzeichnet, dass** die zweite Platte (12) eine, insbesondere zur Nut (13) hin offene, Bohrung (17) aufweist, in die ein an der Innenseite (3b) des breiten Schenkels (3) vorstehender Pin (16) des Einsteckkeils (1) eingreift.

## Claims

1. Insert wedge (1) for fixedly clamping a first panel (11) within a groove (13) in a second panel (12) in order to connect the two panels (11, 12) to each other, comprising
a broad limb (3) having an inner side (3b) determined to bear against the second panel (12), and a wedge-like, narrow limb (4) for pushing in a clamping manner into a gap (14), which is present within the groove (13) when the first panel (11) is inserted, until the broad limb (3) bears by way of its inner side (3b) against the second panel (12), wherein the broad and the narrow limb (3, 4) form an angle (2) of 90°, and
a spring tongue (5) which is integrally formed on the outer side (3a) of the broad limb (3), is inclined in relation to the inner side (3b) of the broad limb (3), and extends by way of its free tongue end (6) beyond the outer side (4a) of the narrow limb (4) in order to be erected by the inserted first panel (11) and be pressed against the first panel (11).

2. Insert wedge according to claim 1, **characterized in that** the outer side (4a) of the narrow limb (4) and the inner side (3b) of the broad limb (3) form an angle of 90°.

3. Insert wedge according to one of the preceding claims, **characterized in that** the outer side (5a) of the spring tongue (5) steplessly adjoins the outer side (4a) of the narrow limb (4).

4. Insert wedge according to claim 3, **characterized in that** the outer side (4a) of the narrow limb (4) and the outer side (5a) of the spring tongue (5) form an angle of between 10° and 20°, in particular of approximately 15°.

5. Insert wedge according to one of the preceding claims, **characterized in that** the outer and/or inner side (4a, 4b) of the narrow limb (4) and/or the outer side (5a) of the spring tongue (5) have/has projections (8).

6. Insert wedge according to one of the preceding claims, **characterized in that** the narrow limb (4) has a slot (7), which is open to the outer side (4a) of the said narrow limb and runs parallel to the spring tongue (5), close to the transition region to the spring tongue (5).

7. Insert wedge according to one of the preceding claims, **characterized in that** the broad limb (3) has a cutout (9) which is open to the inner side (3b) of the said broad limb and to the outer side (3c) of the said broad limb, which outer side is averted from the narrow limb (4).

8. Insert wedge according to one of the preceding claims, **characterized in that** the outer side (4a) of the narrow limb (4) and/or the outer side (5a) of the spring tongue (5) form/forms a flat or a corrugated contact area.

9. Insert wedge according to one of the preceding claims, **characterized in that** the narrow limb (4) and/or the spring tongue (5) are/is in the form of a solid wall or are/is formed by a series of spaced-apart vertical struts (18, 19).

10. Insert wedge according to one of the preceding claims, **characterized in that** the broad limb (3) has a protruding pin (16) on its inner side (3b).

11. Arrangement (10) comprising two panels (11, 12) which are connected to one another, the first panel (11) from amongst the said two panels being inserted into a groove (13) in the other, second panel (12), and comprising an insert wedge (1) according to one of the preceding claims, wherein the wedge-like, narrow limb (4) of the said insert wedge is pushed in a clamping manner into a gap (14), which is present within the groove (13) when the first panel (11) is inserted, until the broad limb (3) bears by way of its inner side (3b) against the second panel (12), and the spring tongue (5) of the said insert wedge is erected and pressed against the first panel (11).

12. Arrangement according to claim 11, **characterized in that** the groove width (B) of the groove (13) is larger than the panel thickness (d) of the first panel (11) by at most the width (b) of the narrow limb (4).

13. Arrangement according to claim 11 or 12, **characterized in that** the second panel (12) has a bore (17) which is, in particular, open to the groove (13), and a pin (16) of the insert wedge (1), which projects from the inner side (3b) of the broad limb (3), engages in the said bore.

## Revendications

1. Coin enfichable (1) conçu pour coincer rigidement un premier panneau (11) à l'intérieur d'une rainure (13) d'un second panneau (12), afin de relier lesdits panneaux (11, 12) l'un à l'autre, comprenant
une aile large (3), munie d'une face intérieure (3b) destinée à venir en applique contre le second panneau (12), et une aile cunéiforme étroite (4) dévolue à l'enfoncement avec effet de coincement, dans un espace interstitiel (14) présent à l'intérieur de ladite rainure (13) à l'état inséré du premier panneau (11), jusqu'à ce que ladite aile large (3) porte contre le second panneau (12) par sa face intérieure (3b), lesdites ailes large et étroite (3, 4) décrivant un ange droit (2), et
une languette élastique (5) qui fait corps avec la face extérieure (3a) de l'aile large (3), est disposée à l'oblique par rapport à la face intérieure (3b) de ladite aile large (3) et s'étend, par son extrémité libre (6), jusqu'au-dessus de la face extérieure (4a) de l'aile étroite (4) afin d'être dressée par l'intermédiaire du premier panneau (11), et pressée contre ledit premier panneau (11).

2. Coin enfichable selon la revendication 1, **caractérisé par le fait que** la face extérieure (4a) de l'aile étroite (4) et la face intérieure (3b) de l'aile large (3) décrivent un angle de 90°.

3. Coin enfichable selon l'une des revendications précédentes, **caractérisé par le fait que** la face extérieure (5a) de la languette élastique (5) se rattache, en continu, à la face extérieure (4a) de l'aile étroite (4).

4. Coin enfichable selon la revendication 3, **caractérisé par le fait que** la face extérieure (4a) de l'aile étroite (4) et la face extérieure (5a) de la languette élastique (5) décrivent un angle compris entre 10° et 20°, d'environ 15° en particulier.

5. Coin enfichable selon l'une des revendications précédentes, **caractérisé par le fait que** la (les) face(s) extérieure et/ou intérieure (4a, 4b) de l'aile étroite (4), et/ou la face extérieure (5a) de la languette élastique (5), comporte(nt) des saillies (8).

6. Coin enfichable selon l'une des revendications précédentes, **caractérisé par le fait que** l'aile étroite (4) est munie, à proximité de la zone de transition avec la languette élastique (5), d'une fente (7) ouverte en direction de sa face extérieure (4a) et s'étendant parallèlement à ladite languette élastique (5).

7. Coin enfichable selon l'une des revendications précédentes, **caractérisé par le fait que** l'aile large (3) est pourvue d'un évidement (9) ouvert en direction de sa face intérieure (3b) et en direction de sa face extérieure (3c) pointant à l'opposé de l'aile étroite (4).

8. Coin enfichable selon l'une des revendications précédentes, **caractérisé par le fait que** la face extérieure (4a) de l'aile étroite (4), et/ou la face extérieure (5a) de la languette élastique (5), forme(nt) une surface de contact plane ou ondulée.

9. Coin enfichable selon l'une des revendications précédentes, **caractérisé par le fait que** l'aile étroite (4), et/ou la languette élastique (5), se présente(nt) comme une paroi massive ou comme une rangée d'entretoises verticales (18, 19) espacées.

10. Coin enfichable selon l'une des revendications précédentes, **caractérisé par le fait que** l'aile large (3) est dotée d'un téton saillant (16) à sa face intérieure (3b).

11. Agencement (10) comprenant deux panneaux (11, 12) qui sont reliés l'un à l'autre et dont l'un, le premier panneau (11), est inséré dans une rainure (13) de l'autre panneau, le second panneau (12), et un coin enfichable (1) conforme à l'une des revendications précédentes, dont l'aile cunéiforme étroite (4) est enfoncée avec effet de coincement, dans un espace interstitiel (14) présent à l'intérieur de ladite rainure (13) à l'état inséré du premier panneau (11), jusqu'à ce que ladite aile large (3) porte contre le second panneau (12) par sa face intérieure (3b), et dont la languette élastique (5) est dressée et pressée contre ledit premier panneau (11).

12. Agencement selon la revendication 11, **caractérisé par le fait que** la largeur (B) de la rainure (13) est supérieure à l'épaisseur (d) du premier panneau (11), au maximum de la largeur (b) de l'aile étroite (4).

13. Agencement selon la revendication 11 ou 12, **caractérisé par le fait que** le second panneau (12) est muni d'un perçage (17) notamment ouvert en direction de la rainure (13), dans lequel pénètre un téton (16) du coin enfichable (1) qui fait saillie à la face intérieure (3b) de l'aile large (3).
